# EUROPÄISCHE PATENTSCHRIFT

(11) **EP 3 175 129 B1**
(45) Veröffentlichungstag und Bekanntmachung des Hinweises auf die Patenterteilung: **24.06.2020**
(21) Anmeldenummer: 15736200.5
(22) Anmeldetag: 09.07.2015
(51) Int. Cl.: F16B 13/06, F16B 13/02, F16B 13/12

(54) **SPREIZDÜBEL**
SPREADING DOWEL
CHEVILLE À EXPANSION

(30) Priorität: 29.07.2014 DE 102014110730
(43) Veröffentlichungstag der Anmeldung: 07.06.2017
(73) Patentinhaber: fischerwerke GmbH & Co. KG, 72178 Waldachtal (DE)
(72) Erfinder: NEHL, Wolfgang, 72178 Waldachtal (DE)
(86) Internationale Anmeldenummer: PCT/EP2015/001405
(87) Internationale Veröffentlichungsnummer: WO 2016/015822

(56) Entgegenhaltungen:
- EP-A1- 0 182 038
- EP-A1- 0 234 183
- EP-A1- 0 543 723
- EP-A2- 2 119 920
- DE-A1- 3 921 733
- DE-A1-102011 000 537

## Beschreibung

Die Erfindung betrifft einen Spreizdübel mit den Merkmalen des Oberbegriffs des Anspruchs 1.

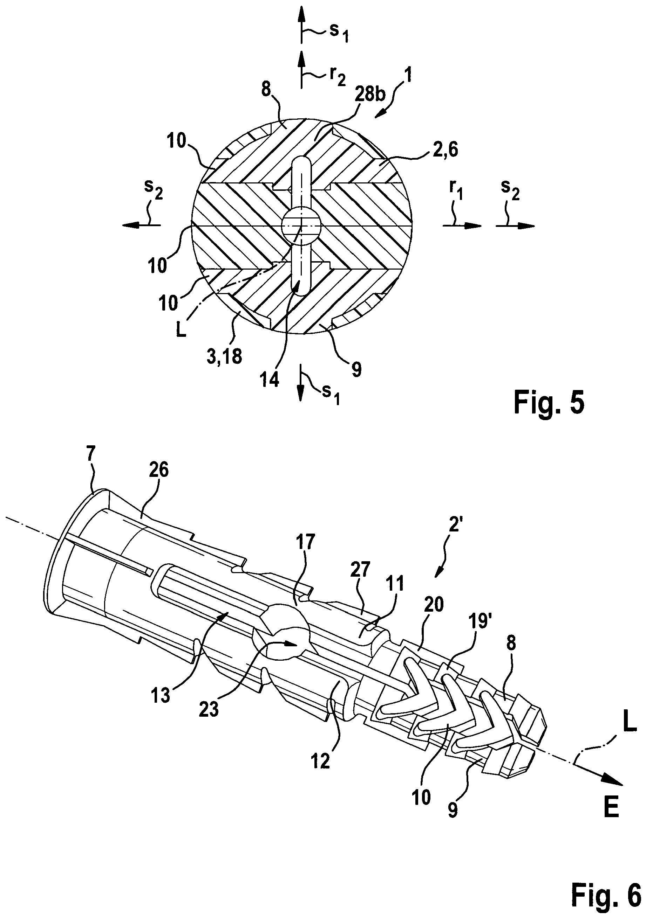

Aus den Figuren 5 bis 8 der Offenlegungsschrift DE 10 2011 000 537 A1 ist ein gattungsgemäßer Spreizdübel bekannt, der aus mehreren unterschiedlichen Kunststoffen besteht und in einem Mehrkomponentenspritzgussverfahren hergestellt wird. Der Spreizdübel dient zur Befestigung von Gegenständen an einem Verankerungsgrund und kann hierzu in ein in dem Verankerungsgrund hergestelltes Bohrloch eingeführt und mit einem Spreizelement verspreizt werden. Der Spreizdübel weist den in Figur 6 der Offenlegungsschrift dargestellten innenliegenden Grundkörper aus einem ersten Kunststoff auf. Der Grundkörper erstreckt sich in Längsrichtung entlang einer Längsachse und besteht aus einer rohrartigen Einführhülse, durch die eine Schraube als Spreizelement in einen innenliegenden und sich in Längsrichtung erstreckenden Spreizkanal eingeführt werden kann. Der Spreizkanal erstreckt sich in einen sich in Einbringrichtung des Dübels an die Einführhülse anschließenden Spreizbereich, der vier durch zwei sich kreuzende Schlitze voneinander getrennte Spreizzungen aufweist, die aus dem ersten Kunststoff hergestellt sind. An den Spreizbereich schließt sich in Einbringrichtung eine Hülse an, die aus zwei Hülsenteilen besteht, die durch V-förmige, elastische und in Umfangsrichtung aufweitbare Verbinder miteinander verbunden sind. Der Grundkörper ist mit einer Hülle aus einem zweiten Kunststoff zumindest teilweise umspritzt, die sich beim Aufspreizen des Spreizdübels zumindest teilweise im Spreizbereich vom Grundkörper löst.

Aufgabe der Erfindung ist, einen Spreizdübel vorzuschlagen, der in seinem Aufspreizverhalten verbessert ist.

Diese Aufgabe wird erfindungsgemäß durch einen Spreizdübel mit den Merkmalen des Anspruchs 1 gelöst. Der erfindungsgemäße Spreizdübel, der aus mindestens zwei unterschiedlichen Kunststoffen besteht, umfasst einen Grundkörper aus einem ersten Kunststoff und eine Hülle aus einem zweiten Kunststoff, die den Grundkörper zumindest teilweise umhüllt. Mit "unterschiedlichen Kunststoffen" sind Kunststoffe gemeint, die sich beispielsweise hinsichtlich ihrer Festigkeit, ihres Elastizitätsmoduls, ihrer chemischen Zusammensetzung, ihres Faseranteils und/oder ihrer Farbe voneinander unterscheiden. Der Grundkörper weist einen Spreizbereich auf, der sich in Längsrichtung entlang einer Längsachse erstreckt und in dem ein Spreizkanal zur Aufnahme eines Spreizelements, insbesondere einer Schraube, ausgebildet ist. Der Spreizkanal erstreckt sich insbesondere ebenfalls entlang der Längsachse und wird zumindest im Spreizbereich durch zwei sich kreuzende und in Längsrichtung des Spreizdübels verlaufende Schlitze gebildet. Der erste Schlitz erstreckt sich in eine erste radiale Richtung, während sich der zweite Schlitz in eine von der ersten radialen Richtung abweichende zweite radiale Richtung erstreckt. Der erste Schlitz durchdringt den Grundkörper im Spreizbereich insbesondere vollständig und teilt ihn in zwei Spreizzungen, die in radialer Richtung voneinander weg bewegbar sind. Die Länge des ersten Schlitzes definiert somit die Länge des Spreizbereichs. Durch die Ausbildung von mindestens zwei Spreizzungen ist der Spreizbereich durch das Einbringen eines Spreizelements aufspreizbar. Die beiden Spreizzungen sind insbesondere vollständig voneinander getrennt, sie können aber beispielsweise auch durch den ersten Kunststoff, beispielsweise durch eine dünne Spritzhaut oder elastische Elemente, miteinander verbunden sein. Eine derartige Verbindung der beiden Spreizzungen ist derart gestaltet, dass sie ein Aufspreizen des Spreizbereichs nicht behindert, sondern zur Führung des Spreizelements im Spreizkanal dient. Damit beim Einführen des Spreizelements möglichst viel Material im Spreizbereich radial nach außen verdrängt und gegen eine Bohrlochwand gepresst werden kann, ist der erste Schlitz im Spreizbereich zumindest teilweise durch ein Hüllelement ausgefüllt, das aus dem zweiten Kunststoff besteht und einen Teil der Hülle bildet.

Erfindungsgemäß durchdringt der zweite Schlitz den Grundkörper nicht radial, so dass im Spreizbereich nur wenige und relativ große Spreizzungen vorhanden sind, insbesondere genau zwei. Der zweite Schlitz schwächt die Spreizzungen in Längsrichtung, wodurch eine Art Scharnier entsteht, so dass die Spreizzungen in radialer Richtung in sich beweglich bzw. um eine zur Längsachse parallele Achse biegsam sind. Dadurch können sie sich einer Bohrlochwand besser anpassen, als dies beispielsweise mit als vollflächige Kreissegmente ausgebildeten Spreizzungen möglich ist. Die verbesserte Anlage der Spreizzungen an einer Bohrlochwand führt zu einem verbesserten Aufspreizverhalten und einem verbesserten Halt des Spreizdübels in einem Bohrloch.

Erfindungsgemäß weist der Grundkörper eine in Einbringrichtung vor dem Spreizbereich angeordnete Hülse auf, die in radialer Richtung aufweitbar ist, in die sich der zweite Schlitz erstreckt. Die "Einbringrichtung" ist die Richtung, in der der Spreizdübel planmäßig in ein Bohrloch eingebracht wird. Die Hülse bildet ein Widerlager für das Spreizelement und kann beim Eindrehen einer Schraube beispielsweise zu einer in Einbringrichtung hinter dem Spreizbereich angeordneten Einführhülse bewegt werden, wodurch der Spreizbereich verkürzt und gestaucht werden kann, so dass die Spreizzungen sich nach außen und radial voneinander wegbewegen. Dadurch, dass sich der zweite Schlitz auch in die Hülse erstreckt, ist die Hülse ebenfalls in sich beweglich, biegsam und aufweitbar. Zudem bildet der zweite Schlitz eine Fortsetzung des Spreizkanals des Spreizbereichs und dient zur Führung des Spreizelements in der Hülse.

Vorzugsweise ist der zweite Schlitz gegenüber dem ersten Schlitz geneigt. Das bedeutet, dass eine Ebene, in der der erste Schlitz liegt, eine Ebene, in der der zweite Schlitz liegt, unter einem Winkel schneidet. Insbesondere sind die beiden Schlitze, bzw. die beiden Ebenen, in denen die Schlitze liegen, orthogonal zueinander.

Insbesondere besteht die Hülse aus zwei Hülsenteilen, die durch mindestens einen Verbinder miteinander verbunden sind. In diesem Fall ist der zweite Schlitz insbesondere derart angeordnet, dass sich der zweite Schlitz in die beiden Hülsenteile erstreckt, diese aber insbesondere nicht radial durchdringt. In dem im Grundkörper liegenden Bereich zwischen den Hülsenteilen kann der Verbinder angeordnet sein. Zudem kann der Bereich zwischen den Hülsenteilen, der vom Verbinder nicht ausgefüllt ist, insbesondere durch den zweiten Kunststoff verfüllt sein, wobei insbesondere die Bereiche, in die sich der zweite Schlitz oder ein zusätzlicher Spreizkanal erstrecken, nicht ausgefüllt sind. Der elastische Verbinder ist insbesondere einstückig mit den beiden Hülsenteilen und ebenfalls aus dem ersten Kunststoff hergestellt. Der Verbinder erlaubt ein Aufweiten der Hülse in einer radialen Richtung bis auf ein durch den Verbinder begrenztes Maß. Dadurch, dass der erste Schlitz die Hülse in zwei miteinander verbundene Hülsenteile trennt, ist die Hülse derart gestaltet, dass sie in radialer Richtung dehnbar ist, so dass sie beim Eindringen des Spreizelements aufgeweitet und zusätzlich zum Spreizbereich, wenn auch in geringerem Maß, aufgespreizt werden kann. Dies hat den Vorteil, dass der Spreizdübel in einem massiven Baustoff zusätzlichen Halt bekommt, aber auch, dass Spreizelemente unterschiedlicher Durchmesser mit dem Spreizdübel verwendet werden können. Der elastische Verbinder lässt ein Aufspreizen der Hülse nur bis zu einem bestimmten Maß zu, so dass Schrauben unterschiedlicher Durchmesser in die Hülse eingeschraubt werden können und ausreichend Halt finden.

Vorzugsweise erstreckt sich nur der zweite Schlitz und nicht der erste Schlitz bis in die Hülse. Der zweite Schlitz gibt somit eine bevorzugte Spreizrichtung der Hülse vor, die orthogonal zu der Ebene ist, in der der zweite Schlitz liegt. Somit ist es möglich, die Spreizrichtung der Hülse unabhängig von der Spreizrichtung des Spreizbereichs zu gestalten.

Insbesondere schneiden sich die Schlitze in einem zentrischen Schraubkanal, der insbesondere einen Kreisquerschnitt aufweist. Ein derartiger Schraubkanal bildet eine gute Führung für das Spreizelement.

Weiterhin ist bevorzugt, dass der erste Schlitz von einer Mantelfläche des Spreizdübels bis zum Schraubkanal mit dem zweiten Kunststoff gefüllt ist, so dass beim Aufspreizen relativ viel Material radial nach außen gegen eine Bohrlochwand verdrängt werden kann.

Vorzugsweise ist der zweite Schlitz nicht mit dem zweiten Kunststoff gefüllt. Das Spreizelement kann somit relativ einfach in den zweiten Schlitz eingeführt und der Spreizbereich bzw. die Hülse dabei senkrecht zur Ebene, in der der zweite Schlitz liegt, aufgespreizt werden.

Vorzugsweise spreizt der Spreizbereich des erfindungsgemäßen Spreizdübels beim Einbringen des Spreizelements im Wesentlichen in eine erste radiale Spreizrichtung auf, während die Hülse in eine davon abweichende zweite radiale Spreizrichtung aufspreizt. Mit "im Wesentlichen" ist hier gemeint, dass sich der Spreizbereich bzw. die Hülse beim Einbringen des Spreizelements in eine bevorzugte Spreizrichtung stärker weitet als in eine andere Richtung. Dies schließt aber nicht aus, dass sich der Spreizbereich und/oder die Hülse auch in andere Richtungen oder insgesamt im Umfang weiten. Insbesondere ist die erste radiale Spreizrichtung orthogonal zu einer Ebene, in der der erste Schlitz liegt, und die zweite radiale Spreizrichtung ist orthogonal zu einer Ebene, in der der zweite Schlitz liegt. Dadurch, dass der erste Schlitz den Spreizbereich insbesondere vollständig durchdringt, ist die erste Spreizrichtung durch diese Ausgestaltung vorgegeben. In der Hülse vermindert dagegen der elastische Verbinder ein Aufspreizen der Hülse in die erste Spreizrichtung, wohingegen der insbesondere nicht mit dem zweiten Material gefüllte zweite Schlitz eine Führung für das Spreizelement bildet, die ein Spreizen der Hülse in die zweite Spreizrichtung und somit senkrecht zu der Ebene erlaubt, in der der zweite Schlitz liegt. Ein Spreizdübel mit Bereichen unterschiedlicher Spreizrichtungen hat den Vorteil, dass der Dübel nicht nur eine bevorzugte Spreizrichtung aufweist, sondern mindestens zwei. Die beim Aufspreizen des Spreizbereichs und der Hülse entstehenden Spreizkräfte werden somit in unterschiedliche Richtungen in den Verankerungsgrund eingeleitet und verteilt, wodurch größere Kräfte vom Spreizdübel über die Bohrlochwand in den Verankerungsgrund eingeleitet werden können.

Vorzugsweise sind die beiden radialen Spreizrichtungen des Spreizbereichs und der Hülse im Wesentlichen orthogonal zueinander, wobei "im Wesentlichen" hier bedeutet, dass eine Abweichung von +/-10° möglich ist.

Durch die erfindungsgemäße Ausgestaltung des Spreizdübels kann der Spreizdübel im Verhältnis zu seinem Außendurchmesser relativ kompakt und kurz ausgebildet werden. Vorzugsweise ist das Verhältnis der Länge des Spreizdübels von seinem vorderen Ende bis zum hinteren Ende des Spreizbereichs zum Durchmesser des Spreizbereichs kleiner als 6, insbesondere kleiner oder gleich 5. Mit "Durchmesser" ist hier allgemein der Durchmesser eines den Spreizdübel im Spreizbereich umschreibenden Zylinders gemeint.

Insbesondere ist der erste und/oder der zweite Schlitz relativ eng ausgeführt, was bedeutet, dass die lichte Weite eines Schlitzes kleiner als 15%, insbesondere kleiner oder gleich 10 % des Durchmessers des Spreizdübels im Spreizbereich ist. Auch in diesem Zusammenhang ist mit "Durchmesser" allgemein der Durchmesser eines den Spreizdübel im Spreizbereich umschreibenden Zylinders gemeint.

Die Erfindung wird nachfolgend anhand von zwei Ausführungsbeispielen näher erläutert.

Es zeigen:
- Figur 1: einen ersten erfindungsgemäßen Spreizdübel in einer Seitenansicht;
- Figur 2: den Grundkörper des ersten Spreizdübels in einer perspektivischen Seitenansicht;
- Figur 3: einen Axialschnitt entlang der Achse III-III durch den ersten Spreizdübel;
- Figur 4: einen Schnitt durch den ersten Spreizdübel entlang der Achse IV-IV;
- Figur 5: einen Schnitt durch den ersten Spreizdübel entlang der Achse V-V; und
- Figur 6: den Grundkörper eines zweiten erfindungsgemäßen Spreizdübels in einer perspektivischen Seitenansicht.

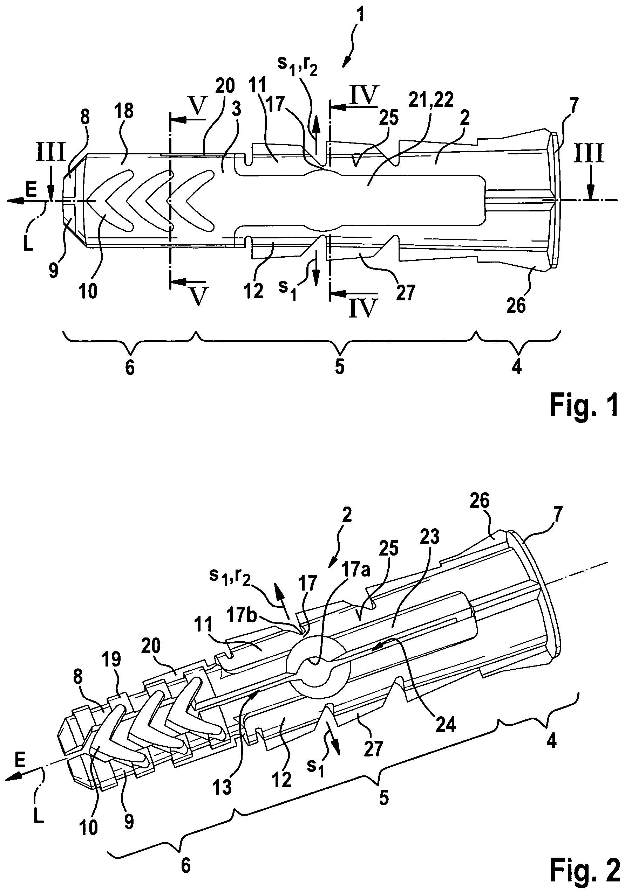

In den Figuren 1 bis 5 ist ein erster erfindungsgemäßer Spreizdübel 1 dargestellt, der zur Befestigung eines Gegenstands (nicht dargestellt) in ein Bohrloch (nicht dargestellt) eingebracht und mit einem Spreizelement, insbesondere einer Schraube (nicht dargestellt), verspreizt werden kann. Der Spreizdübel 1 besteht aus einem Grundkörper 2 aus einem ersten Kunststoff und einer Hülle 3 aus einem zweiten, sich vom ersten Kunststoff unterscheidenden Kunststoff. Der erste Kunststoff ist im Ausführungsbeispiel ein Polyamid, während der zweite Kunststoff ein Polypropylen ist. Der Grundkörper 2 ist ohne die Hülle 3 in Figur 2 dargestellt und besteht aus einer Einführhülse 4, die in Einbringrichtung E hinten am Grundkörper 2 angeordnet ist, einem sich an die Einführhülse 4 in Einbringrichtung E anschließenden Spreizbereich 5 und eine am Grundkörper 2 vorn angeordnete Hülse 6. Die Einbringrichtung E ist die Richtung, in die der Spreizdübel 1 planmäßig in ein Bohrloch eingebracht wird. Die Einführhülse 4, durch die ein Spreizelement in den Spreizdübel 1 planmäßig eingeführt werden kann, ist im Ausführungsbeispiel als kurzer Hohlzylinder ausgebildet, der sich entlang der Längsachse L erstreckt und an dessen Außenseite vier hintere Verdrehsicherungsrippen 26 angeordnet sind. Am hinteren Ende der Einführhülse 4 ist ein umlaufendender Bund 7 angeordnet, der das hintere Ende des Grundkörpers 2 und des Spreizdübels 1 bildet und verhindert, dass der Spreizdübel 1 zu tief in ein Bohrloch eingebracht werden kann. Die vorn am Grundkörper 2 angeordnete Hülse 6 besteht aus zwei halbschalenförmigen Hülsenteilen 8, 9 die durch drei V-förmige elastische Verbinder 10 miteinander verbunden sind, so dass die Hülse 6 beim Einbringen eines Spreizelements in radialer Richtung aufweitbar ist, wobei sich die Verbinder 10 in radialer Richtung dehnen. Zwischen der Hülse 6 und der Einführhülse 4 erstreckt sich der Spreizbereich 5 entlang der Längsachse L.

Der Spreizbereich 5 weist zwei Spreizzungen 11, 12 auf, die durch einen ersten Schlitz 13 gebildet werden, der sich in Längsrichtung des Spreizdübels 1 und in eine erste radiale Richtung r₁ erstreckt und den Grundkörper 2 im Spreizbereich 5 vollständig durchdringt. In den Figuren 1 und 2 verläuft die erste radiale Richtung r₁ senkrecht zur Bildebene. Die axiale Länge des ersten Schlitzes 13 definiert die axiale Länge der Spreizzungen 11, 12 und somit die Länge des Spreizbereichs 5. Dadurch, dass die beiden Spreizzungen 11, 12 durch den ersten Schlitz 13 vollständig voneinander getrennt sind, können die Spreizzungen 11, 12 beim Einbringen eines Spreizelements voneinander weg bewegt und in eine erste Spreizrichtung s₁ aufgespreizt werden. Die erste Spreizrichtung s₁ ist orthogonal zu einer Ebene, in der der erste Schlitz 13 liegt. Damit die Spreizzungen 11, 12 schon durch eine kleine, beim Einführen eines Spreizelements in den Spreizbereich 5 entstehende und in die erste Spreizrichtung s₁ wirkende Spreizkraft aufgespreizt werden können, weisen die Spreizzungen 11, 12 lokale Schwächungen 17 auf, die als Sollknickstellen wirken. Die Schwächungen 17 sind im Spreizbereich 5 ungefähr in Längsrichtung mittig an den Spreizzungen 11, 12 zwischen der Hülse 6 und der Einführhülse 4 angeordnet und bestehen jeweils aus zwei Teilen: Jeweils einem in radialer Richtung innen an den Spreizzungen 11, 12 angeordneten inneren Teil 17a, der als konisch abgeschrägte, kreissegmentförmige Höhlung ausgeführt ist, und jeweils einem in radialer Richtung außen an den Spreizzungen 11, 12 angeordneten äußeren Teil 17b, der schlitz- bzw. keilförmig ausgestaltet ist. Beim Aufspreizen knicken die beiden Spreizzungen 11, 12 an den Schwächungen 17 aus und werden in die erste Spreizrichtung s₁ voneinander weg und orthogonal zur ersten radialen Richtung r₁ bzw. zu einer Ebene bewegt, in der der erste Schlitz 13 liegt.

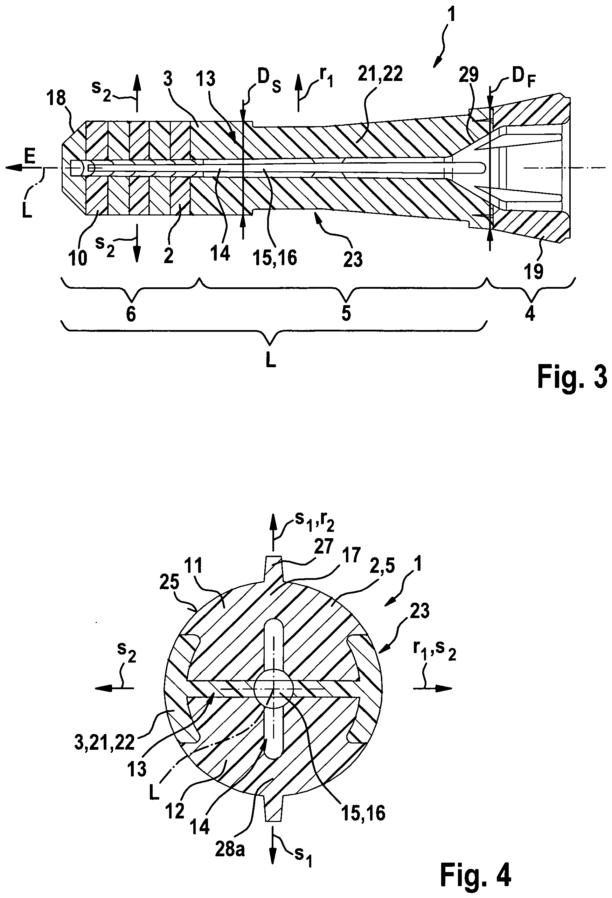

Wie in den Figuren 3 und 4 dargestellt, bildet der erste Schlitz 13 mit einem zweiten Schlitz 14 im Spreizbereich 5 einen Spreizkanal 15 zur Aufnahme eines Spreizelements (nicht dargestellt). Der zweite Schlitz 14 erstreckt sich in Längsrichtung des Spreizdübels 1 und in eine zweite radiale Richtung r₂, die orthogonal zur ersten radialen Richtung r₁ und parallel zur ersten Spreizrichtung s₁ ist. Der Spreizkanal 15 ist aufgrund der beiden sich kreuzenden und zueinander geneigten Schlitze 13, 14 kreuzförmig und weist in dem Bereich, in dem sich die beiden Schlitze 13, 14 schneiden, einen zentrischen Schraubkanal 16 mit Kreisquerschnitt auf. Der Schraubkanal 16 dient zur Führung einer als Spreizelement in den Spreizkanal 15 eingeschraubten Schraube (nicht dargestellt) und erstreckt sich bis in die Hülse 6. Der zweite Schlitz 14 erstreckt sich in die zweite radiale Richtung r₂ nur soweit, dass er den Grundkörper 2 im Spreizbereich 5 nicht durchdringt. Der zweite Schlitz 14 schwächt die Spreizzungen 11, 12 lokal, so dass an den Spreizzungen 11, 12 eine Art Scharnier 28a ausgebildet ist, das parallel zur Längsachse L verläuft und bewirkt, dass sich die Spreizzungen 11, 12, die einen nahezu halbkreisförmigen Querschnitt aufweisen, sich an eine unebene Bohrlochwand (nicht dargestellt) anpassen können.

Während der erste Schlitz 13 ausschließlich im Spreizbereich 5 angeordnet ist und sich nicht bis in die Hülse 6 erstreckt, und somit die Länge des Spreizbereichs 5 definiert, erstreckt sich der zweite Schlitz 14 bis in die Hülse 6 und verläuft, wie der Schraubkanal 16, nahezu bis zum vorderen Ende des Spreizdübels 1, wie dies in Figur 3 zu sehen ist. Der zweite Schlitz 14 durchdringt auch die beiden Hülsenteile 8, 9 in radialer Richtung nicht, wodurch auch in den beiden Hülsenteile 8, 9 Scharniere 28b entstehen, derart, dass auch die beiden Hülsenteile 8, 9 entlang einer parallel zur Längsachse L verlaufenden Achse in sich verformt werden können. Zudem durchtrennt der zweite Schlitz 14 die Hülse 6 im Inneren der Hülse 6, wodurch der zweite Schlitz 14 eine orthogonal zum Schlitz 14 verlaufende zweite Spreizrichtung s₂ definiert, in die die Hülse 6 beim Einbringen eines Spreizelements im Wesentlichen aufgespreizt wird. Die Hülse 6 wird sich aufgrund der elastischen Verbinder 10 zwar auch in die zweite radiale Richtung r₂ weiten, allerdings nicht in dem Maß, wie dies aufgrund des zweiten Schlitzes 14 in die zweiten Spreizrichtungen s₂ möglich ist. Da die Schlitze 13, 14 orthogonal zueinander stehen, spreizt der Spreizbereich 5 beim Einbringen eines Spreizelements im Wesentlichen in die erste radiale Spreizrichtung s₁ auf, während die Hülse 6 im Wesentlichen in die davon abweichende zweite radiale Spreizrichtung s₂ aufspreizt, die orthogonal zur ersten Spreizrichtung s₁ ist.

Die Hülse 6 ist durch einen Hüllkörper 18 der Hülle 3 teilweise umhüllt. Um zu verhindern, dass die Hülle 3 beim Aufspreizen des Spreizdübels 1 relativ zur Hülse 6 verschoben wird, sind außen an der Hülse 6 des Grundkörpers 2 Rippen 19 und längliche Blöcke 20 angeordnet. Jeweils vier Rippen 19 sind an jedem der beiden Hülsenteile 8, 9 als in Umfangsrichtung verlaufende, in Längsrichtung voneinander beabstandete und radial nach außen stehende Teile eines Kreisrings ausgebildet, die vom Hüllkörper 18 umgeben und umschlossen sind, derart, dass die Rippen 19 den Hüllkörper 18 axialfest an der Hülse 6 halten. Die Abstände zwischen benachbarten Rippen 19 entsprechen dabei der axialen Erstreckung der Rippen 19. Die beiden Blöcke 20 sind quaderförmig ausgebildet und verlaufen in Längsrichtung des Spreizdübels 1. Je ein Block 20 ist am hinteren Teil der Hülse 6 angeordnet, wobei sich die Blöcke 20 bis in den Spreizbereich 5 erstrecken. Die Blöcke 20 sind in Umfangsrichtung und in Längsrichtung von der Hülle 3 umgeben, die sie in radialer Richtung durchdringen. Die Blöcke 20 verhindern eine Bewegung des Hüllkörpers 18 auf der Hülse 6 in Umfangsrichtung.

In Figur 6 ist ein alternativer Grundkörper 2' dargestellt, bei dem die Rippen 19' in Einbringrichtung E keilförmig abgeschrägt sind, wodurch eine begrenzte Bewegung des Hüllkörpers 18 auf der Hülse 6 möglich ist. Durch die keilförmige Abschrägung führt eine Bewegung des Hüllkörpers 18 entgegen der Einbringrichtung E zu einer zusätzlichen Aufweitung des Hüllkörpers 18, was die Haltekraft des Spreizdübels 1 in einem Bohrloch verbessert.

An dem Hüllkörper 18 sind zwei Hüllelemente 21 als Flügelelemente 22 angeordnet, die sich vom Hüllkörper 18 ausgehend entgegen der Einbringrichtung E und im Wesentlichen in Längsrichtung L kragarmförmig in den Spreizbereich 5 erstrecken (siehe Figuren 1, 3 und 4). Die beiden Flügelelemente 22 sind auf radial entgegengesetzten Seiten des Spreizbereichs 5 des Spreizdübels 1 angeordnet und außer über den Hüllkörper 18 nicht miteinander verbunden. Die Verbindung mit dem Hüllkörper 18 ist einstückig, steif und biegefest. Die beiden Flügelelemente 22 liegen in Öffnungen 24, die durch nutartige, quaderförmige Ausnehmungen 23, den ersten Schlitz 13 und den inneren Teilen 17a der Schwächungen 17 im Spreizbereich 5 gebildet sind. Die Ausnehmungen 23 verlaufen außen in Längsrichtung des Spreizdübels 1 und sind im Verhältnis zur Größe der Spreizzungen 11, 12 relativ klein und schwächen die Spreizzungen 11, 12 nur unwesentlich. Die beiden Flügelelemente 22 sind somit auch zwischen den zwei Spreizzungen 11, 12 angeordnet und erstrecken sich über die gesamte Länge des Spreizbereichs 5. Die aus dem zweiten Kunststoff hergestellten Flügelelemente 22 füllen den ersten Schlitz 13 von einer Mantelfläche 25 des Spreizdübels 1 bis zum Schraubkanal 16 sowie die Öffnungen 24 und die inneren Teile 17a der Schwächung 17 vollständig aus. Der innenliegende zweite Schlitz 14 ist allerdings nicht mit dem zweiten Kunststoff der Hülle 3 gefüllt. Damit das Einführen eines Spreizelements in den Spreizbereich 5 durch die Flügelelemente 22 nicht behindert wird, sind die Flügelelemente 22 an ihren hinteren, der Einführhülse 4 zugewandten Enden 29 innen gegenüber der Längsachse L des Spreizdübels 1 abgeschrägt. Die Flügelelemente 22 sind kragarmförmig ausgebildet, derart, dass sie bereits bei geringen Spreizkräften aufspreizen, insbesondere schon dann, wenn das Spreizelement nur gegen die hinteren Enden 29 der Flügelelemente 22 drückt. Die Ausbildung der Flügelelemente 22 als Kragarme hat den Vorteil, dass die Spreizkräfte mit einem großen Hebelarm zur Verbindungstelle mit dem Hüllkörper 18 an den hinteren Enden 29 der Flügelelemente 22 wirken, so dass schon eine kleine Spreizkraft ausreicht, um die hinteren Enden 29 der Flügelelemente 22 trotz der biegesteifen Verbindung mit dem Hüllkörper 18 radial nach außen zu drücken. Im unverspreizten Zustand des Spreizdübels 1, also vor dem Einführen eines Spreizelements in den Spreizkanal 15, stehen die Flügelelemente 22 in radialer Richtung über den Grundkörper 2 im Spreizbereich 5 über. Im Schnitt der Figur 3 wird dies deutlich: Der Spreizbereich 5 weist über seine Länge einen konstanten Außendurchmesser Ds auf, während sich die beiden Flügelelemente 23 im hinteren Bereich entgegen der Einbringrichtung E keilförmig erweitern, so dass sie im Bereich ihres hinteren Endes 29 einen größeren Durchmesser D_{F} als der Spreizbereich 5 aufweisen. Die Flügelelemente 23 wirken gemeinsam mit den hinteren Verdrehsicherungsrippen 26 und zwei außen auf den Spreizzungen 11, 12 ausgebildeten, sich über die Länge des Spreizbereichs 5 erstreckenden und teilweise unterbrochenen vorderen Verdrehsicherungsrippen 27 gegen ein Mitdrehen des Spreizdübels 1 in einem Bohrloch beim Eindrehen eines Spreizelements in den Spreizkanal 15.

Durch das Verfüllen der Öffnungen 24 im Spreizbereich 5 und von Bereichen zwischen den Hülsenteilen 8, 9 der Hülse 6 mit dem zweiten Kunststoff kann beim Verspreizen des Spreizdübels 1 in einem den Spreizdübel 1 umgebenden Bohrloch relativ viel Material gegen die Wand des Bohrlochs gepresst werden, wobei die Teile des Spreizdübels 1 durch die Verwendung unterschiedlicher Kunststoffe gegeneinander beweglich und zum Aufspreizen leicht verformbar bleiben. Dadurch kann der Spreizdübel 1 sehr kompakt und kurz gestaltet werden, mit einem Verhältnis der Länge L vom vorderen Ende der Hülse 6 bis zum hinteren Ende des Spreizbereichs 5 zum Durchmesser Ds des Spreizbereichs 5 von ungefähr 5.

### Bezuaszeichenliste

- 1: Spreizdübel
- 2,2': Grundkörper
- 3: Hülle
- 4: Einführhülse
- 5: Spreizbereich
- 6: Hülse
- 7: Bund
- 8: erstes Hülsenteil
- 9: zweites Hülsenteil
- 10: Verbinder
- 11: erste Spreizzunge
- 12: zweite Spreizzunge
- 13: erster Schlitz
- 14: zweiter Schlitz
- 15: Spreizkanal
- 16: Schraubkanal
- 17: Schwächung
- 17a: innerer Teil der Schwächung 17
- 17b: äußerer Teil der Schwächung 17
- 18: Hüllkörper
- 19, 19': Rippe
- 20: Block
- 21: Hüllelement
- 22: Flügelelement
- 23: Ausnehmung
- 24: Öffnung
- 25: Mantelfläche des Spreizbereichs 5
- 26: hintere Verdrehsicherungsrippe
- 27: vordere Verdrehsicherungsrippe
- 28a: Scharnier einer Spreizzunge 11, 12
- 28b: Scharnier eines Hülsenteils 8, 9
- 29: hinteres Ende eines Flügelelements 22
- D_{F}: Außendurchmesser der Flügelelemente 22
- D_{S}: Außendurchmesser des Spreizbereichs 5
- E: Einbringrichtung
- L: Längsachse
- r₁: erste radiale Richtung
- r₂: zweite radiale Richtung
- s₁: erste Spreizrichtung
- s₂: zweite Spreizrichtung

## Patentansprüche

1. Spreizdübel (1), der aus mindestens zwei unterschiedlichen Kunststoffen besteht, mit einem Grundkörper (2, 2') aus einem ersten Kunststoff, der von einer Hülle (3) aus dem zweiten Kunststoff zumindest teilweise umhüllt ist, wobei der Grundkörper (2, 2') einen sich entlang einer Längsachse (L) erstreckenden Spreizbereich (5) mit mindestens zwei Spreizzungen (11, 12) aufweist, wobei zwischen den Spreizzungen (11, 12) ein Spreizkanal (15) zur Aufnahme eines Spreizelements ausgebildet ist, wobei der Spreizkanal (15) im Spreizbereich (5) durch zwei sich kreuzende Schlitze (13, 14) gebildet ist, wobei sich der erste Schlitz (13) in eine erste radiale Richtung (r₁) erstreckt, den Grundkörper (2, 2') im Spreizbereich (5) durchdringt und in die zwei Spreizzungen (11, 12) teilt, und wobei der erste Schlitz (13) im Spreizbereich (5) durch ein Hüllelement (21) der Hülle (3) aus dem zweiten Kunststoff zumindest teilweise ausgefüllt ist,
**dadurch gekennzeichnet,**
**dass** der zweite Schlitz (14) den Grundkörper (2, 2') nicht radial durchdringt,
und **dass** der Spreizdübel (1) eine in Einbringrichtung (E) vor dem Spreizbereich (5) angeordnete und in radialer Richtung aufweitbare Hülse (6) aufweist, in die sich der zweite Schlitz (14) erstreckt.

2. Spreizdübel nach Anspruch 1, **dadurch gekennzeichnet, dass** der zweite Schlitz (14) gegenüber dem ersten Schlitz (13) geneigt ist.

3. Spreizdübel nach Anspruch 1 oder 2, **dadurch gekennzeichnet, dass** sich der erste Schlitz (13) nicht bis in die Hülse (6) erstreckt.

4. Spreizdübel nach einem der Ansprüche 1 bis 3, **dadurch gekennzeichnet, dass** sich die Schlitze (13, 14) in einem zentrischen Schraubkanal (16) schneiden, der insbesondere einen Kreisquerschnitt aufweist.

5. Spreizdübel nach einem der Ansprüche 1 bis 4, **dadurch gekennzeichnet, dass** der erste Schlitz (13) von der Mantelfläche (25) des Spreizdübels (1) bis zum Schraubkanal (16) mit dem zweiten Kunststoff gefüllt ist.

6. Spreizdübel nach einem der Ansprüche 1 bis 5, **dadurch gekennzeichnet, dass** der zweite Schlitz (14) nicht mit dem zweiten Kunststoff gefüllt ist.

7. Spreizdübel nach einem der Ansprüche 1 bis 6, **dadurch gekennzeichnet, dass** der Spreizbereich (5) beim Einbringen eines Spreizelements im Wesentlichen in eine erste radiale Spreizrichtung (s₁) aufspreizt, während die Hülse (6) im Wesentlichen in eine davon abweichende zweite radiale Spreizrichtung (s₂) aufspreizt.

8. Spreizdübel nach Anspruch 7, **dadurch gekennzeichnet, dass** die beiden Spreizrichtungen (s₁, s₂) im Wesentlichen orthogonal zueinander sind.

9. Spreizdübel nach einem der Ansprüche 1 bis 8, **dadurch gekennzeichnet, dass** das Verhältnis der Länge des Spreizdübels (1) von seinem vorderen Ende bis zum hinteren Ende des Spreizbereichs (5) zum Durchmesser (D_{S}) des Spreizbereichs (5) kleiner als 6, insbesondere kleiner oder gleich 5 ist.

## Claims

1. Expansible fixing plug (1) which consists of at least two different plastics materials, having a main body (2, 2') made of a first plastics material, which main body is at least partly encased by a casing (3) made of the second plastics material, the main body (2, 2') having an expansion region (5) that extends along a longitudinal axis (L) and has at least two expansion tongues (11, 12), between which expansion tongues (11, 12) there is formed an expansion channel (15) for receiving an expander element, the expansion channel (15) being formed in the expansion region (5) by two intersecting slots (13, 14), wherein the first slot (13) extends in a first radial direction (r₁), passes through the main body (2, 2') in the expansion region (5) and divides the two expansion tongues (11, 12), and wherein the first slot (13), in the expansion region (5), is at least partly filled by a casing element (21) of the casing (3) made of the second plastics material,
**characterised in that**
the second slot (14) does not pass radially through the main body (2, 2'),
and the expansible fixing plug (1) has a sleeve (6) which is arranged to the front of the expansion region (5) in the direction of introduction (E) and is widenable in a radial direction, into which sleeve the second slot (14) extends.

2. Expansible fixing plug according to claim 1, **characterised in that** the second slot (14) is inclined with respect to the first slot (13).

3. Expansible fixing plug according to claim 1 or 2, **characterised in that** the first slot (13) does not extend into the sleeve (6).

4. Expansible fixing plug according to any one of claims 1 to 3, **characterised in that** the slots (13, 14) intersect in a central screw channel (16), which especially has a circular cross-section.

5. Expansible fixing plug according to any one of claims 1 to 4, **characterised in that** the first slot (13) is filled with the second plastics material from the outer surface (25) of the expansible fixing plug (1) to the screw channel (16).

6. Expansible fixing plug according to any one of claims 1 to 5, **characterised in that** the second slot (14) is not filled with the second plastics material.

7. Expansible fixing plug according to any one of claims 1 to 6, **characterised in that,** on introduction of an expander element, the expansion region (5) expands substantially in a first radial expansion direction (si), while the sleeve (6) expands substantially in a second radial expansion direction (s₂) different therefrom.

8. Expansible fixing plug according to claim 7, **characterised in that** the two radial expansion directions (s₁, s₂) are substantially orthogonal with respect to one another.

9. Expansible fixing plug according to any one of claims 1 to 8, **characterised in that** the ratio between the length of the expansible fixing plug (1) from its front end to the rear end of the expansion region (5) and the diameter (Dₛ) of the expansion region (5) is less than 6, especially less than or equal to 5.

## Revendications

1. Cheville expansible (1) consistant en au moins deux matières plastiques différentes, munie d'un corps de base (2, 2') constitué d'une première matière plastique et ceinturé, au moins en partie, par une enveloppe (3) constituée de la seconde matière plastique, ledit corps de base (2, 2') comportant une zone de déploiement (5) s'étendant le long d'un axe longitudinal (L) et dotée d'au moins deux languettes déployables (11, 12), sachant qu'un canal d'expansion (15), conçu pour recevoir un élément d'écartement, est ménagé entre lesdites languettes déployables (11, 12), lequel canal d'expansion (15) est formé par deux fentes (13, 14) s'entrecroisant dans la zone de déploiement (5), sachant que la première fente (13) s'étend dans une première direction radiale (r₁), traverse le corps de base (2, 2') dans ladite zone de déploiement (5) et se scinde en lesdites deux languettes déployables (11, 12), et sachant que ladite première fente (13) est comblée au moins en partie, dans ladite zone de déploiement (5), par un élément d'enveloppement (21) de l'enveloppe (3) constituée de la seconde matière plastique,
**caractérisée par le fait**
**que** la seconde fente (14) ne traverse pas le corps de base (2, 2') dans le sens radial ;
et par le fait que ladite cheville expansible (1) est pourvue d'une douille (6) qui est située avant la zone de déploiement (5) dans la direction d'insertion (E), peut être élargie dans le sens radial, et dans laquelle ladite seconde fente (14) s'insinue.

2. Cheville expansible selon la revendication 1, **caractérisée par le fait que** la seconde fente (14) est inclinée par rapport à la première fente (13).

3. Cheville expansible selon la revendication 1 ou 2, **caractérisée par le fait que** la première fente (13) ne s'étend pas jusque dans la douille (6).

4. Cheville expansible selon l'une des revendications 1 à 3, **caractérisée par le fait que** les fentes (13, 14) s'entrecoupent dans un canal central de vissage (16) présentant, en particulier, une section transversale circulaire.

5. Cheville expansible selon l'une des revendications 1 à 4, **caractérisée par le fait que** la première fente (13) est emplie de la seconde matière plastique, depuis la surface (25) de l'enveloppe de ladite cheville expansible (1) jusqu'au canal de vissage (16).

6. Cheville expansible selon l'une des revendications 1 à 5, **caractérisée par le fait que** la seconde fente (14) n'est pas emplie de la seconde matière plastique.

7. Cheville expansible selon l'une des revendications 1 à 6, **caractérisée par le fait que**, lors de l'insertion d'un élément d'écartement, la zone de déploiement (5) se déploie pour l'essentiel dans une première direction radiale de déploiement (si), cependant que la douille (6) se déploie, pour l'essentiel, dans une seconde direction radiale de déploiement (s₂) différant de la direction précitée.

8. Cheville expansible selon la revendication 7, **caractérisée par le fait que** les deux directions de déploiement (s₁, s₂) sont substantiellement perpendiculaires l'une à l'autre.

9. Cheville expansible selon l'une des revendications 1 à 8, **caractérisée par le fait que** le rapport entre la longueur de ladite cheville expansible (1), de son extrémité antérieure jusqu'à l'extrémité postérieure de la zone de déploiement (5), et le diamètre (D_{S}) de ladite zone de déploiement (5), est inférieur à 6, notamment inférieur ou égal à 5.
